(19) Europäisches Patentamt / European Patent Office / Office européen des brevets

(11) **EP 3 281 053 B1**

(12) **FASCICULE DE BREVET EUROPEEN**

(45) Date de publication et mention
de la délivrance du brevet:
**11.10.2023 Bulletin 2023/41**

(21) Numéro de dépôt: **16719232.7**

(22) Date de dépôt: **08.04.2016**

(51) Classification Internationale des Brevets (IPC):
**G01B 9/02091** *(2022.01)*   **G02B 21/14** *(2006.01)*
**G02B 21/00** *(2006.01)*   **G01N 21/47** *(2006.01)*
**G02B 21/18** *(2006.01)*

(52) Classification Coopérative des Brevets (CPC):
**G01B 9/02091; G01N 21/4795; G02B 21/0004;
G02B 21/14;** G02B 21/18

(86) Numéro de dépôt international:
**PCT/EP2016/057827**

(87) Numéro de publication internationale:
**WO 2016/162521 (13.10.2016 Gazette 2016/41)**

(54) **PROCEDE ET SYSTEME D'IMAGERIE PAR MICROSCOPIE INTERFERENTIELLE PLEIN CHAMP**

VERFAHREN UND SYSTEM ZUR BILDGEBUNG MITTELS
VOLLFELD-INTERFERENZMIKROSKOPIE

METHOD AND SYSTEM FOR FULL-FIELD INTERFERENCE MICROSCOPY IMAGING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.04.2015 FR 1553120**

(43) Date de publication de la demande:
**14.02.2018 Bulletin 2018/07**

(73) Titulaire: **LLtech Management
75014 Paris (FR)**

(72) Inventeurs:
• **BOCCARA, Albert Claude
75006 Paris (FR)**
• **HARMS, Fabrice
91400 Orsay (FR)**

(74) Mandataire: **Osha Liang
2, rue de la Paix
75002 Paris (FR)**

(56) Documents cités:
• **Kwan Jeong ET AL: "Volumetric motility-contrast imaging of tissue response to cytoskeletal anti-cancer drugs References and links", OPTICS EXPRESS Vol. 15 No. 21, 17 octobre 2007 (2007-10-17), pages 14057-14064, XP055288832, Extrait de l'Internet: URL:https://www.osapublishing.org/DirectPDFAccess/4B466359-F14C-04C1-016B5193F9BFD83 D_143084/oe-15-21-14057.pdf?da=1&id=143084 &seq=0&mobile=no [extrait le 2016-07-15]**
• **HREBESH M S ET AL: "In vivo imaging of dynamic biological specimen by real-time single-shot full-field optical coherence tomography", OPTICS COMMUNICATIONS, NORTH-HOLLAND PUBLISHING CO. AMSTERDAM, NL, vol. 282, no. 4, 15 février 2009 (2009-02-15), pages 674-683, XP025840731, ISSN: 0030-4018, DOI: 10.1016/J.OPTCOM.2008.10.070 [extrait le 2008-11-24]**
• **HREBESH MOLLY SUBHASH ET AL: "Full-Field and Single-Shot Full-Field Optical Coherence Tomography: A Novel Technique for Biomedical Imaging Applications", ADVANCES IN OPTICAL TECHNOLOGIES, vol. 1315, no. 3, 1 janvier 2012 (2012-01-01), pages 205-26, XP055150097, ISSN: 1687-6393, DOI: 10.1364/AO.36.006620**

- **GOLNAZ FARHAT ET AL: "Detecting apoptosis using dynamic light scattering with optical coherence tomography", JOURNAL OF BIOMEDICAL OPTICS, vol. 16, no. 7, 1 janvier 2011 (2011-01-01), page 070505, XP055252554, US ISSN: 1083-3668, DOI: 10.1117/1.3600770**

**Description**

**DOMAINE TECHNIQUE**

La présente description concerne un procédé et un système d'imagerie par microscopie interférentielle plein champ. Elle est applicable notamment à l'imagerie cellulaire et intracellulaire.

**ETAT DE L'ART**

La technique d'acquisition d'image par microscopie interférentielle plein champ en lumière incohérente, connue sous le nom d'OCT plein champ (OCT étant l'abréviation de l'acronyme « Optical Cohérence Tomography »), est une méthode non invasive, non destructive et endogène qui est très performante pour l'acquisition d'images de tissus biologiques.

La technique d'imagerie OCT plein champ est par exemple décrite dans l'article « Full-field optical cohérence tomography » de A. Dubois et C. Boccara, extrait de l'ouvrage « Optical Cohérence Tomography - Technology and Applications » - Wolfgang Drexler - James G. Fujimoto - Editors - Springer 2009. La technique d'imagerie OCT plein champ est également décrite dans la demande de brevet français FR2817030.

La technique d'imagerie OCT plein champ est basée sur l'exploitation de la lumière rétrodiffusée par un échantillon lorsqu'il est éclairé par une source lumineuse à faible longueur de cohérence, et en particulier l'exploitation de la lumière rétrodiffusée par les structures microscopiques cellulaires et tissulaires dans le cas d'un échantillon biologique. Cette technique exploite la faible cohérence de la source lumineuse pour isoler la lumière rétrodiffusée par une tranche virtuelle en profondeur dans l'échantillon. L'emploi d'un interféromètre permet de générer, par un phénomène d'interférence, un signal d'interférence représentatif de la lumière provenant sélectivement d'une tranche donnée de l'échantillon, et d'éliminer la lumière provenant du reste de l'échantillon.

La technique d'imagerie OCT plein champ permet d'obtenir des images en trois dimensions avec une résolution typique de l'ordre de $1 \mu m$, ce qui est supérieur aux résolutions de l'ordre de $10 \mu m$ susceptibles d'être obtenues avec d'autres techniques OCT conventionnelles telles que l'OCT dans le domaine spectral (connue sous l'acronyme « Fourier-Domain OCT » ou « spectral domain OCT »).

Avec une telle résolution, on peut visualiser la majorité des structures tissulaires de vaisseaux sanguins, de leurs parois, le collagène, les adipocytes, etc. Cette technique permet ainsi de visualiser des microstructures de tissus biologiques variés comme le cerveau, le sein, la peau, le foie etc., comme cela est décrit par exemple dans l'article : « Large Field, High Resolution Full-Field Optical Cohérence Tomography: A Pre-clinical Study of Human Breast Tissue and Cancer Assessment », O. Assayag et al., Technology in Cancer Research and Treatment Volume 13, N° 5, October 2014. De plus cette technique se montre particulièrement rapide : il est ainsi possible de générer à l'aide d'un microscope à OCT plein champ une image représentative d'une tranche en profondeur dont la surface est de plusieurs cm$^2$ en quelques minutes seulement.

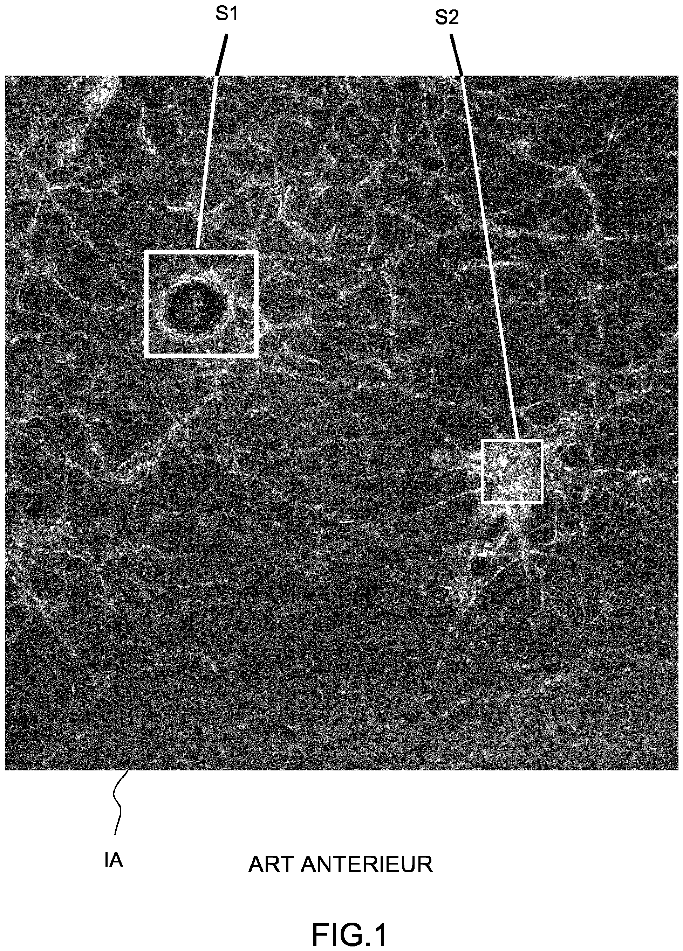

La figure 1 est un exemple d'une image obtenue par la technique OCT plein champ pour un échantillon de tissu d'un foie (biopsie optique réalisée sur un foie de rat) sur laquelle sont visibles notamment des fibres de collagène. L'image, référencée IA, correspond à une zone d'échantillon de taille $800 \mu m$ par $800 \mu m$ (micron). Cette figure illustre les possibilités de cette technique pour la mise en évidence et la visualisation de structures biologiques très fines.

Il a été montré que la technique d'acquisition d'image par OCT plein champ est potentiellement utilisable pour des applications médicales telles que le diagnostic du cancer, puisque la visualisation des microstructures et de l'architecture tissulaire permet dans un nombre élevé de cas de distinguer un tissu sain d'un tissu cancéreux en quelques minutes, de manière non destructive. Une image OCT plein champ pendant le temps de l'opération permet par exemple de réaliser un premier niveau de diagnostic, voire d'optimiser le geste chirurgical dans le cas par exemple de cancers, pour éventuellement éviter une ré-opération dans le cas où l'analyse histologique viendrait révéler la présence de cellules tumorales uniquement quelques jours après l'exérèse.

De plus la technique OCT plein champ permet l'acquisition d'images in-vivo, éventuellement in-situ avec par exemple des endoscopes, ce qui renforce la pertinence de la technique dans le domaine médical.

Cependant, bien que la technique OCT plein champ présente une résolution spatiale théorique suffisante pour générer des images de tissus biologiques à l'échelle cellulaire et intracellulaire (de l'ordre de $1 \mu m$ dans les trois dimensions), les déposants ont montré qu'en pratique, elle ne permet pas toujours de distinguer de manière nette les cellules, ni même des noyaux ou structures internes de cellules (membrane, noyau, cytoplasme notamment) en raison d'un contraste insuffisant dans les images obtenues.

Par exemple, dans l'exemple de la figure 1, le signal rétrodiffusé provenant de fibres de collagène présente, en raison de l'indice élevé de réfraction des structures lipidiques et protéiniques, une intensité élevée. Par contre, le signal rétrodiffusé provenant de structures internes des cellules est d'intensité très faible, environ 400 fois plus faible que celui des fibres de collagène. La différence d'intensité des signaux rétrodiffusés par les différentes structures de la cellule et du tissu explique que malgré l'excellente résolution spatiale de la technologie OCT plein champ, cette technologie ne permet pas d'acquérir avec une dynamique suffisante les signaux de faible intensité.

D'autres techniques de microscopie utilisées en anatomopathologie permettent quant à elles la visualisation, au moyen d'un microscope, de cellules et de structures de cellules sur un échantillon tissulaire: ces techniques consistent à effectuer un prélèvement tissulaire dans une zone à analyser, puis à préparer une lame de tissu observable sous un microscope conventionnel. La préparation consiste à mettre le tissu en paraffine, à y découper des tranches très fines - de l'ordre de 3 à 5 μm d'épaisseur - et à appliquer sur ces tranches des agents de contraste ou colorants permettant de rehausser le contraste des structures cellulaires et ainsi faciliter leur visualisation par le médecin anatomopathologiste. Typiquement, une combinaison d'hématoxyline et d'éosine est appliquée à ces tranches, afin de colorer les structures de soutien et les noyaux des cellules de manière spécifique. D'autres colorations peuvent aussi être appliquées pour permettre une visualisation de certaines structures de manière encore plus spécifique. La tranche de tissu résultante est ensuite placée sur une lame de microscope et observée à divers grossissements par l'anatomopathologiste. L'examen macroscopique à faible grossissement ainsi que l'examen microscopique à fort grossissement permettent d'observer l'architecture tissulaire ainsi que les détails cellulaires présents sur l'échantillon de tissu. Un ensemble de critères de lecture permet d'effectuer un diagnostic du cancer, avec par exemple l'examen de la réaction stromale résultant de l'invasion tumorale ou encore l'examen du ratio noyau/cytoplasme au niveau de la cellule individuelle.

Ces techniques de microscopie présentent cependant plusieurs inconvénients. En premier lieu, ces techniques sont destructives, puisque, contrairement à la technique OCT plein champ qui permet d'obtenir une image d'une tranche virtuelle de l'échantillon de tissu, ces techniques nécessitent de préparer une tranche physique de l'échantillon de la manière décrite. Le tissu ne sera ainsi plus utilisable pour d'autres types d'analyses. D'autre part, ces techniques reposent sur une préparation complexe de l'échantillon, incluant sa manipulation physique au cours de multiples étapes (mise en paraffine, découpe, marquage) ainsi que l'utilisation d'agents de contraste exogènes tels que des colorants spécifiques de structures cellulaires: la qualité finale de l'échantillon ainsi préparé, et par voie de conséquence la qualité du diagnostic correspondant est donc dépendante de l'opérateur. Enfin, ces techniques ne sont pas adaptées à une utilisation peropératoire, car compte-tenu des différentes étapes pour préparer le tissu, il faut en général plusieurs jours avant de pouvoir procéder à une observation du tissu.

Il apparaît donc un besoin pour une technique d'imagerie pour l'acquisition d'images d'un échantillon, notamment d'un tissu biologique, qui remédie à au moins une partie des limitations et/ou inconvénients de l'état de la technique.

## RESUME

Selon un premier aspect, la présente description concerne un système d'imagerie par microscopie interférentielle plein champ d'un échantillon volumique diffusant comprenant :

- un dispositif d'interférence comprenant un bras objet destiné à recevoir l'échantillon et un bras de référence sur lequel est agencée une surface de réflexion, le dispositif d'interférence étant adapté pour produire, lorsque l'échantillon est disposé sur le bras objet du dispositif d'interférence, en chaque point d'un champ d'imagerie, une interférence entre une onde de référence obtenue par réflexion d'ondes lumineuses incidentes sur une surface élémentaire de la surface de réflexion correspondant audit point du champ d'imagerie et une onde objet obtenue par rétrodiffusion d'ondes lumineuses incidentes par un voxel d'une tranche de l'échantillon à une profondeur donnée, ledit voxel correspondant audit point du champ d'imagerie,
- un dispositif d'acquisition adapté pour acquérir, à différence de marche fixe entre le bras objet et le bras de référence, une succession temporelle de N signaux interférométriques bidimensionnels résultant des interférences produites en chaque point du champ d'imagerie,
- une unité de traitement configurée pour calculer une image représentative de variations temporelles d'intensité entre lesdits N signaux interférométriques bidimensionnels.

Le champ d'imagerie est limité dans ses dimensions par exemple par une surface de détection utile du dispositif d'acquisition ou par un diaphragme de champ du système d'imagerie. Ainsi, selon un exemple, le champ d'imagerie au niveau de la tranche de l'échantillon (ou tranche de cohérence) est la zone conjuguée avec la surface utile du dispositif d'acquisition (ou avec le diaphragme de champ). Un « point » du champ d'imagerie est défini dans ses dimensions par les dimensions d'un détecteur élémentaire du dispositif d'acquisition.

Une surface élémentaire de la surface de réflexion correspondant à un point du champ d'imagerie représente dans la présente description une surface élémentaire définie sur la surface de réflexion et dont la position correspond à la position du point du champ d'imagerie défini relativement à un repère bidimensionnel associé au dispositif d'acquisition.

Un voxel correspondant à un point du champ d'imagerie représente dans la présente description un volume élémentaire défini dans la tranche de cohérence et dont la position dans la tranche de cohérence correspond à la position du point du champ d'imagerie défini relativement à un repère bidimensionnel associé au dispositif d'acquisition. Une onde rétrodiffusée par un voxel est représentative de l'amplitude de la somme cohérente des ondes rétrodiffusées par l'ensemble des structures élémentaires diffusantes présentes dans ce voxel.

Le système d'imagerie ainsi décrit permet d'obtenir une image de l'échantillon représentative des variations temporelles d'intensité entre les signaux interférométriques à différence de marche fixe, et dont les déposants ont montré qu'elle permettait d'accéder à des informations non perceptibles au moyen des images obtenues selon les techniques d'OCT plein champ selon l'art antérieur. Par différence de marche fixe, on comprend ici que la variation de chemin optique entre le bras de référence et le bras objet est constante ; par exemple, il n'y a pas de variation relative de la position de l'échantillon par rapport à la surface de réflexion.

Les avantages associés à cette technique d'imagerie dans le domaine de l'imagerie cellulaire ou intracellulaire découlent notamment des constats faits par les déposants quant à l'activité se produisant au niveau cellulaire ou intracellulaire, et plus précisément des différents mouvements à l'origine des variations temporelles d'intensité entre les signaux interférométriques: flux ou circulation de liquides et aussi mouvements intracellulaires de différentes organites (ou « organelles ») telles que cytosquelette, noyaux de cellules, mitochondries, lysosomes, etc.

Selon un ou plusieurs modes de réalisation du système d'imagerie, l'unité de traitement est configurée pour calculer l'image en calculant, pour chaque pixel de position donnée dans cette image, une valeur de pixel en fonction d'une valeur d'un paramètre représentatif des variations temporelles d'intensité des N signaux interférométriques bidimensionnels acquis en un point de position correspondante dans un repère bidimensionnel associé au dispositif d'acquisition.

L'extraction d'un paramètre représentatif des fluctuations ou variations temporelles, sur une période de temps, des intensités des signaux interférométriques acquis en un point donné, permet de mettre en évidence, dans l'image calculée, des régions tissulaires et cellulaires de l'échantillon dans lesquelles se produisent des mouvements.

Selon un ou plusieurs modes de réalisation, ce paramètre est un paramètre représentatif de la dispersion temporelle des intensités des N signaux interférométriques bidimensionnels considérés. Un tel paramètre est par exemple l'écart type de la distribution statistique des intensités. On réalise de la sorte une mesure globale représentative de la dispersion temporelle des intensités lumineuses rétrodiffusées en un endroit donné du tissu biologique.

Une représentation sous forme d'image des valeurs obtenues pour ce paramètre permet de mettre en évidence et de visualiser les régions tissulaires où se produisent des mouvements.

Selon un ou plusieurs modes de réalisation du système d'imagerie, un pixel de l'image présente au moins une composante, définie relativement à un espace de représentation colorimétrique, dont la valeur est fonction de la valeur du paramètre choisi. Par exemple, dans le cas d'une image en niveaux de gris, les zones de l'échantillon qui sont animées par un mouvement important et pour lesquelles la valeur de ce paramètre est donc élevée, ressortiront dans de telles images avec un niveau de gris élevé. A contrario, les parties pour lesquelles aucun mouvement n'est détecté et présentant une valeur de paramètre nulle, présenteront un niveau de gris très faible.

Cette méthode d'acquisition d'image est particulièrement intéressante dans le cas de tissus présentant une grande variété de structures et donc de diffuseurs, pour lesquelles la dynamique du signal rétrodiffusé est très étendue.

Selon un ou plusieurs modes de réalisation du système d'imagerie :

- le dispositif d'acquisition est configuré pour acquérir en outre P signaux interférométriques bidimensionnels pour la tranche d'échantillon à différentes valeurs de la différence de marche entre les deux bras du dispositif d'interférence,
- l'unité de traitement est configurée pour calculer une image, dite image combinée, à partir des intensités des P signaux interférométriques bidimensionnels et desdites variations temporelles d'intensité.

Comparativement à une image tomographique obtenue par un procédé d'imagerie OCT plein champ selon l'art antérieur, l'image combinée constitue une représentation de l'échantillon plus complète et plus riche en information sur les différentes structures présentes dans l'échantillon du fait qu'elle combine, d'une part, les informations susceptibles d'être obtenues par un procédé d'imagerie OCT plein champ selon l'art antérieur, ces informations étant représentatives des intensités des signaux rétrodiffusés par les différents voxels et, d'autre part, les informations représentatives des variations temporelles d'intensité des signaux rétrodiffusés par les différents voxels.

Selon un mode de réalisation du système d'imagerie, l'unité de traitement est configurée pour calculer l'image combinée en calculant, pour un pixel de position donnée dans l'image combinée, une valeur de pixel en fonction, d'une part, des intensités des P signaux interférométriques bidimensionnels acquis en un point de position correspondante dans un repère bidimensionnel associé au dispositif d'acquisition et, d'autre part, des variations temporelles d'intensité des N signaux interférométriques bidimensionnels acquis en un point de position correspondante dans un repère bidimensionnel associé au dispositif d'acquisition.

Les différents modes de réalisation du système d'imagerie selon la présente description sont combinables entre eux.

Selon un deuxième aspect, la présente description concerne un procédé d'imagerie par microscopie interférentielle plein champ d'un échantillon volumique diffusant comprenant :

- la mise en place de l'échantillon sur un bras objet d'un dispositif d'interférence,
- la production, au moyen du dispositif d'interférence, pour chaque point d'un champ d'imagerie, d'une interférence entre une onde de référence obtenue par réflexion d'ondes lumineuses incidentes sur une surface élémentaire d'une surface de réflexion d'un bras de référence du dispositif d'interférence, ladite surface élémentaire correspondant audit point du champ d'imagerie, et une onde objet obtenue par rétrodiffusion de l'onde incidente par un voxel d'une tranche de l'échantillon à une profondeur donnée, ledit voxel correspondant audit point du champ d'imagerie,
- l'acquisition, à différence de marche fixe entre le bras objet et le bras de référence, d'une succession temporelle de N signaux interférométriques bidimensionnels résultant des interférences produites en chaque point du champ d'imagerie,
- le calcul d'une image représentative de variations temporelles d'intensité entre les N signaux interférométriques bidimensionnels.

Selon un mode de réalisation du procédé d'imagerie, l'étape de calcul de l'image comprend le calcul, pour chaque pixel de position donnée dans l'image, d'une valeur de pixel en fonction d'une valeur d'un paramètre représentatif des variations temporelles d'intensité des N signaux interférométriques bidimensionnels acquis en un point de position correspondante dans un repère bidimensionnel associé au dispositif d'acquisition.

Selon un mode de réalisation particulier, ce paramètre est représentatif de la dispersion temporelle des intensités des N signaux interférométriques bidimensionnels acquis.

Selon un mode de réalisation du procédé d'imagerie, un pixel de l'image présente au moins une composante, définie relativement à un espace de représentation colorimétrique, dont la valeur est fonction de la valeur du paramètre choisi.

Selon un mode de réalisation, le procédé d'imagerie comprend en outre :

- l'acquisition d'au moins P signaux interférométriques bidimensionnels pour la tranche d'échantillon à différentes valeurs de la différence de marche entre les deux bras du dispositif d'interférence,
- le calcul d'une image, dite image combinée, à partir des intensités des P signaux interférométriques bidimensionnels et desdites variations temporelles d'intensité.

Selon un mode de réalisation du procédé d'imagerie, le calcul de l'image combinée comprend, pour chaque pixel de position donnée de l'image combinée, le calcul d'une valeur de pixel en fonction, d'une part, des intensités des P signaux interférométriques bidimensionnels acquis en un point de position correspondante dans un repère bidimensionnel associé au dispositif d'acquisition et, d'autre part, des variations temporelles d'intensité des N signaux interférométriques bidimensionnels acquis en un point de position correspondante dans un repère bidimensionnel associé au dispositif d'acquisition.

Les avantages énoncés pour le système d'imagerie sont transposables au procédé d'imagerie selon le deuxième aspect de la présente description.

Les différents modes de réalisation du procédé d'imagerie selon le deuxième aspect de la présente description sont combinables entre eux.

Différentes caractéristiques et modes de réalisation des différents aspects de la présente description peuvent également être combinés entre eux.

## BREVE DESCRIPTION DES FIGURES

D'autres avantages et caractéristiques de la technique d'imagerie présentée ci-dessus apparaîtront à la lecture de la description détaillée ci-dessous, faite par référence aux figures dans lesquelles :

- la figure 1 (déjà décrite) est un exemple d'une image, dite image FFOCT, d'un échantillon de tissu biologique (foie de rat) présentant des fibres de collagène produite en utilisant un procédé d'imagerie en OCT plein champ selon l'art antérieur ; un tel procédé sera nommé par la suite procédé d'imagerie FFOCT;
- la figure 2 est un schéma de principe d'un mode de réalisation d'un système d'imagerie selon la présente description;
- la figure 3 est un organigramme d'un mode de réalisation d'un procédé d'imagerie selon la présente description ; ce procédé sera nommé par la suite procédé d'imagerie DC-FFOCT,
- la figure 4 est un exemple d'une image, dite image DC-FFOCT, du même échantillon que celui représenté sur la figure 1, au même endroit, dans la même tranche de cohérence, obtenue en utilisant un procédé d'imagerie DC-FFOCT selon la présente description;
- les figures 5A et 5B représentent des courbes de variation d'intensité des signaux acquis dans un exemple de procédé d'imagerie DC-FFOCT en 2 points de l'échantillon dont une image est présentée sur la figure 4, les 2 points faisant partie de zones présentant respectivement une absence de mouvement intracellulaire et une présence d'un mouvement intracellulaire ;

- les figures 6A et 6B représentent les distributions statistiques des intensités de signaux dont les courbes de variation sont représentées respectivement sur les figures 5A et 5B ;

- la figure 7 est un organigramme d'un mode de réalisation d'un procédé d'imagerie pour la génération d'une image combinée; un tel procédé sera nommé par la suite procédé d'imagerie CDC-FFOCT (pour « Combined Dynamic Contrast FFOCT ») ;

- la figure 8 est un exemple d'une image, dite image CDC-FFOCT, résultant d'un procédé d'imagerie CDC-FFOCT tel que décrit par référence à la figure 7 et représentant le même échantillon que celui représenté sur les figures 1 et 4, au même endroit et dans la même tranche de cohérence.

## DESCRIPTION DETAILLEE

Système d'imagerie

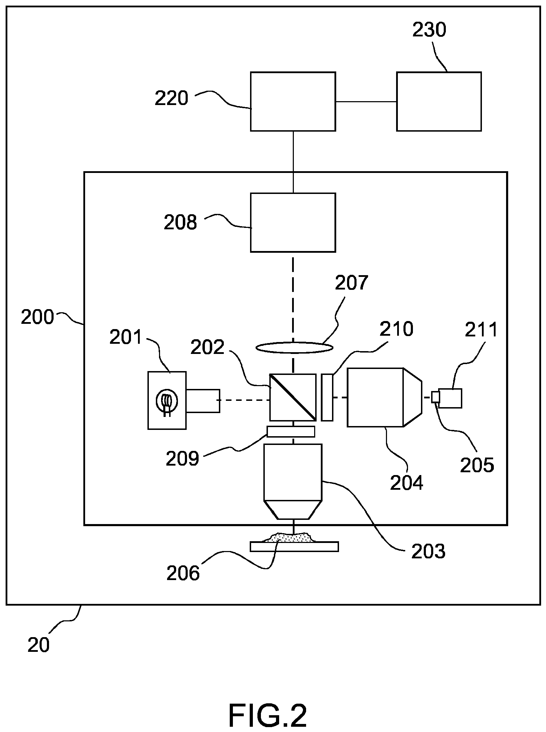

Un mode de réalisation d'un système d'imagerie 20 adapté à la mise en oeuvre de procédés d'imagerie d'un échantillon volumique selon la présente description est représenté schématiquement sur la figure 2.

Le système d'imagerie 20 comprend un dispositif d'interférence 200, un dispositif d'acquisition 208 et au moins une unité de traitement 220.

Le dispositif d'interférence 200 est adapté pour produire des interférences optiques entre, d'une part, des ondes de référence obtenues par réflexion de la lumière émise par une source lumineuse 201 spatialement incohérente et de faible longueur de cohérence par chaque surface élémentaire d'une surface de réflexion 205 d'un bras de référence du dispositif d'interférence et, d'autre part, des ondes objet obtenues par rétrodiffusion de la lumière émise par la même source par chaque voxel d'une tranche d'un échantillon 206 en profondeur dans l'échantillon, l'échantillon 206 étant disposé sur un bras objet du dispositif d'interférence, ledit voxel et ladite surface élémentaire correspondant au même point du champ d'imagerie.

La source lumineuse 201 est une source incohérente ou de faible longueur de cohérence (en pratique, dans une gamme de 1 à 20 micromètres), par exemple une lampe halogène ou une LED. Selon un ou plusieurs exemples de réalisation, la source lumineuse 201 peut faire partie du système d'imagerie 20, comme dans l'exemple de la figure 2, ou peut être un élément extérieur au système d'imagerie, le système d'imagerie étant adapté à travailler avec des ondes lumineuses émises par la source.

Le dispositif d'acquisition 208 permet l'acquisition d'au moins un signal interférométrique bidimensionnel résultant des interférences entre les ondes de référence et les ondes objet.

L'unité de traitement 220 est configurée pour exécuter au moins une étape de traitement d'au moins un signal interférométrique bidimensionnel acquis par le dispositif d'acquisition 208 et/ou au moins une étape de génération d'image conformément à au moins un des procédés d'imagerie selon la présente description, afin de générer au moins une image de la tranche d'échantillon.

Dans un mode de réalisation, l'unité de traitement 220 est un dispositif informatique comprenant une première mémoire CM1 (non représentée) pour le stockage d'images numériques, une deuxième mémoire CM2 (non représentée) pour le stockage d'instructions de programme ainsi qu'un processeur de données, apte à exécuter des instructions de programme stockées dans cette deuxième mémoire CM2, notamment pour commander l'exécution d'au moins une étape de traitement d'au moins un signal interférométrique bidimensionnel acquis par le dispositif d'acquisition 208 et/ou d'au moins une étape de calcul d'image conformément à au moins un des procédés d'imagerie selon la présente description.

L'unité de traitement peut également être réalisée sous forme de circuit intégré, comprenant des composants électroniques adaptés pour mettre en oeuvre la ou les fonctions décrites dans ce document pour l'unité de traitement. L'unité de traitement 220 peut également être mise en œuvre par un ou plusieurs dispositifs physiquement distincts.

Le dispositif d'acquisition 208 est par exemple un capteur d'image, de type caméra CCD (Charge-Coupled Device) ou CMOS (Complementarity metal-oxide-semiconductor). Ce dispositif d'acquisition est capable d'acquérir des images à cadence élevée, par exemple à une fréquence de 100Hz. Selon la dynamique de l'échantillon étudié, et plus précisément la dynamique des mouvements au sein de l'échantillon, on pourra utiliser les caméras fonctionnant de quelques Hz jusqu'à quelques KHz.

Selon un mode de réalisation, l'interféromètre 200 comprend un élément séparateur de faisceau 202, par exemple un cube séparateur non polarisant, permettant de former deux bras. Dans l'un des bras, qui sera par la suite nommé « bras de référence », se trouve la surface de réflexion 205, plane, par exemple un miroir. L'autre bras, qui sera par la suite nommé « bras objet », est destiné à recevoir, en fonctionnement, l'échantillon 206 volumique et diffusant, pour une tranche duquel on souhaite produire une image tomographique à au moins une profondeur selon l'un des procédés de la présente description.

Dans l'exemple de la figure 2, l'interféromètre est de type interféromètre de Linnik et comprend deux objectifs de microscope identiques 203, 204 agencés sur chacun des bras. La surface de réflexion 205 se trouve ainsi au foyer de l'objectif 204 du bras de référence et l'échantillon 206 est destiné à être positionné au foyer de l'objectif 203 du bras objet. D'autres types d'interféromètres peuvent être envisagés pour la mise en oeuvre des procédés selon la présente description, et notamment des interféromètres de type Michelson, Mirau, Fizeau etc.

En sortie d'interféromètre 200 est placée une optique 207, par exemple un doublet achromatique, dont la focale est adaptée pour permettre un échantillonnage adéquat de l'échantillon 206 par le dispositif d'acquisition 208, et qui permet de conjuguer les plans situés aux foyers des deux objectifs dans un même plan en sortie du dispositif d'interférence. Le dispositif d'acquisition 208 est placé dans ce dernier plan afin d'acquérir les signaux d'interférence produits par le dispositif d'interférence. Afin de ne pas limiter la résolution permise par les objectifs de microscope 203 et 204, le choix de la focale de l'optique 207 sera fait en adéquation avec le critère de Shannon. La focale de l'optique 207 est par exemple de quelques centaines de millimètres, typiquement 300 mm.

Des lames de verre 209, 210 sont si nécessaire prévues sur chacun des bras pour compenser la dispersion.

La source de lumière 201 ayant une faible longueur de cohérence, des interférences entre la lumière réfléchie par la surface de réflexion 205 (onde de référence) et celle rétrodiffusée par l'échantillon 206 n'ont lieu que lorsque les chemins optiques dans les deux bras sont égaux, à la longueur de cohérence près. Ainsi, des interférences ont lieu entre l'onde de référence et la lumière rétrodiffusée par chaque voxel d'une tranche située dans un plan perpendiculaire à l'axe optique du bras objet, à une profondeur donnée de l'échantillon, appelée tranche de cohérence, un voxel étant un volume élémentaire défini dans la tranche de cohérence. La lumière rétrodiffusée par chaque voxel est représentative de l'amplitude de la somme cohérente des ondes rétrodiffusées par l'ensemble des structures élémentaires diffusantes présentes dans ce voxel.

Les signaux interférométriques résultant des interférences optiques entre les ondes de référence et les ondes rétrodiffusées par les différents voxels sont acquis en parallèle à un instant t par le dispositif d'acquisition 208. Il en résulte une image interférométrique S correspondant à l'état d'interférence à un instant t donné de la tranche de cohérence. Un élément d'image ou pixel d'image interférométrique situé à une position donnée (x,y), définie relativement à un repère bidimensionnel associé au dispositif d'acquisition 208, présente une valeur S(x,y,t) qui correspond à l'intensité du signal interférométrique, acquis à l'instant t à la position (x,y), résultant de l'interférence entre l'onde rétrodiffusée par le voxel de position correspondante dans l'échantillon et l'onde de référence réfléchie par une surface élémentaire de la surface de réflexion 205 du bras de référence de position correspondante.

Plus précisément, l'intensité lumineuse S(x, y, t) du signal interférométrique acquis par le dispositif d'acquisition 208 à la position (x,y) et à l'instant t, peut s'exprimer sous la forme :

$$S(x, y, t) = \frac{S_0}{4}\left(RA(x, y) + RB(x, y, t) + R_{ref} + 2\sqrt{RB(x, y, t)R_{ref}}\cos\phi(x, y, t)\right) \qquad (1)$$

où :

$S_0$ est l'intensité lumineuse de l'onde incidente à l'entrée de l'interféromètre ;

$RA(x,y)$ est un coefficient de réflexion équivalent, proportionnel à l'intensité de la lumière rétrodiffusée par l'échantillon qui n'interfère pas, c'est-à-dire la lumière rétrodiffusée par des structures de l'échantillon situées hors de la tranche de cohérence ;

$RB(x,y,t)$ est un coefficient de réflexion équivalent, proportionnel à l'intensité de la lumière rétrodiffusée par un voxel de l'échantillon 206 dans la tranche de cohérence, en une position (x, y) donnée et à un instant t donné ;

$R_{ref}$ est le coefficient de réflexion de la surface de référence (surface de réflexion 205) ;

$\phi(x, y, t)$ est la phase relative entre l'onde de référence et l'onde rétrodiffusée par le voxel de l'échantillon à la position (x, y) et à l'instant t.

L'unité de traitement 220 est configurée pour générer une image de l'échantillon 206 à partir d'au moins signal interférométrique bidimensionnel obtenu par le dispositif d'acquisition 208.

Différentes méthodes d'utilisation de ce système d'imagerie et de génération d'images à partir de signaux interférométriques bidimensionnels produit par ce système d'imagerie sont décrites plus en détail ci-dessous.

Procédé d'imagerie DC-FFOCT

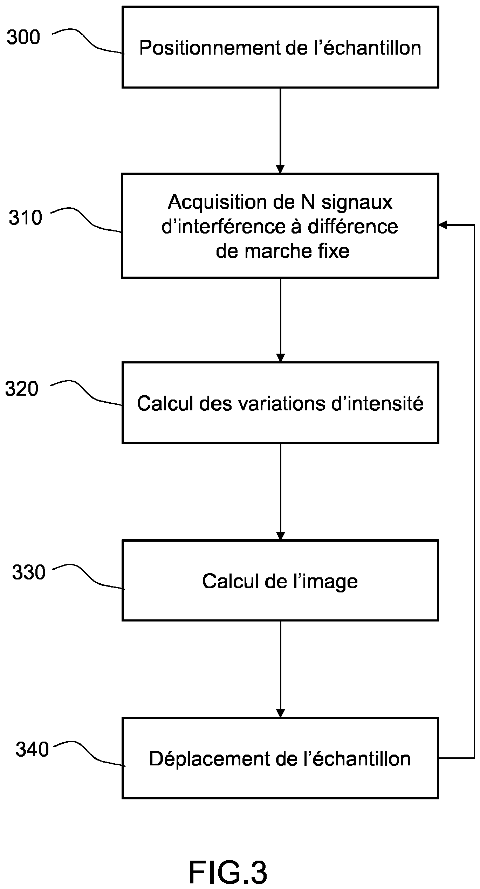

Les principales étapes d'un mode de réalisation d'un procédé d'imagerie selon la présente description, nommé DC-FFOCT (pour « Dynamic Contrast FFOCT »), sont décrites par référence à la figure 3. Ce procédé s'applique notamment à l'imagerie intracellulaire et peut être mis en oeuvre par le système d'imagerie 20.

Lors d'une étape initiale 300, le procédé d'imagerie DC-FFOCT est initialisé et un échantillon 206 est placé dans le bras objet du dispositif d'interférence 200 à une position permettant d'analyser une première tranche d'échantillon. Cette première tranche est la tranche courante pour la première exécution des étapes 310 à 330 décrites ci-dessous.

Lors de l'étape 310, une succession temporelle de N signaux interférométriques bidimensionnels de la tranche courante de l'échantillon 206 est acquise par le dispositif d'acquisition 208 à différence de marche fixe entre le bras objet et le bras de référence. En particulier, aucune variation de la différence de marche n'est produite dans ce cas, contrairement à ce qui est fait pour un procédé d'imagerie OCT plein champ selon l'art antérieur.

Selon un mode de réalisation, la différence de marche est maintenue fixe en maintenant à une position fixe à la fois la surface de réflexion dans le bras de référence et l'échantillon 206 dans le bras objet du dispositif d'interférence 200. En l'absence de variation de la différence de marche, l'analyse des signaux d'interférence obtenus pour une tranche d'échantillon permet d'obtenir un signal interférométrique bidimensionnel mettant en évidence clairement les mouvements internes à l'échantillon 206 pour les structures présentes dans cette tranche de l'échantillon.

La durée d'acquisition de la succession de signaux interférométriques bidimensionnels et/ou la fréquence d'acquisition (et donc le nombre de signaux interférométriques bidimensionnels) peuvent être choisie de manière adaptée aux caractéristiques des mouvements cellulaires ou intracellulaires à mettre en évidence. Par exemple, plus ces mouvements sont rapides et plus la fréquence d'acquisition sera choisie élevée de manière à échantillonner de manière significative les différentes intensités du signal interférométrique en un endroit donné. A contrario, pour des mouvements plus lents, une fréquence plus basse et une durée d'acquisition plus longue peuvent s'avérer plus adaptées. Le nombre N est choisi typiquement entre $10^2$ et $10^4$, par exemple autour de 1000, pour une fréquence d'acquisition comprise entre 100 et 1000 images par seconde, typiquement 100 images par seconde, soit une acquisition sur une durée comprise entre 0,1 et 100 secondes, typiquement une dizaine de secondes. Ces paramètres peuvent varier en fonction des applications visées : en fonction de la nature des cellules, des différentes pathologies pour lesquelles les images sont à générer ou de la longueur d'onde utilisée. Avec les caméras travaillant de quelques Hz jusqu'au kHz on obtient un échantillonnage adapté aux différentes applications.

Il résulte de l'acquisition des N signaux interférométriques bidimensionnels (étape 310) N images interférométriques $SN_i(x,y)$, où $SN_i(x,y)$ est l'intensité du signal acquis à la position (x,y) par le dispositif de détection, i étant un nombre entier variant de 1 à N et (x,y) représentant la position, relativement à un repère bidimensionnel associé au dispositif d'acquisition 208. Ces images interférométriques sont stockées dans la première mémoire CM1 accessible par l'unité de traitement d'image 220 ou bien sont transmises à l'unité de traitement 220.

Conformément à l'équation (1) ci-dessus, chaque intensité lumineuse $SN_i(x,y)$ du signal interférométrique acquis à la position (x,y) à l'instant t=t; est de la forme :

$$ SN_i(x,y) = \frac{S_0}{4}\left(RA(x,y) + RB_i(x,y) + R_{ref} + 2\sqrt{RB_i(x,y)R_{ref}}\cos\phi_i(x,y)\right) \qquad (2) $$

où $S_0$, $RA(x,y)$, $R_{ref}$ ont été définis dans l'équation (1) ci-dessus, $RB_i(x,y)$ est le coefficient de réflexion proportionnel à l'intensité lumineuse rétrodiffusée à l'instant t; par un voxel de l'échantillon 206 à une position donnée (x, y) dans la tranche de cohérence, et $\phi_i(x, y)$ est la phase relative entre l'onde de référence et l'onde rétrodiffusée par le voxel de l'échantillon à la position (x, y) à l'instant ti.

En pratique, les déposants ont montré que des mouvements des diffuseurs selon un axe parallèle à l'axe optique du bras objet (mouvement « vertical ») résultent en des variations de la phase relative $\phi(x, y)$ entre l'onde de référence et l'onde rétrodiffusée tandis des mouvements des diffuseurs dans un plan perpendiculaire à l'axe optique du bras objet (mouvement « horizontal ») résultent en des variations du coefficient de réflexion $RB(x,y)$ proportionnel à l'intensité lumineuse rétrodiffusée. En pratique, les fluctuations d'intensité entre les intensités lumineuses $SN_i(x,y)$ résultent des deux mouvements « horizontal » et « vertical ».

L'unité de traitement 220 du système d'imagerie est ensuite utilisée pour calculer une image, dite image à contraste dynamique ou image DC-FFOCT, représentative de variations temporelles d'intensité entre ces N signaux interférométriques bidimensionnels acquis par le dispositif d'acquisition 208. Le calcul de cette image à contraste dynamique comprend les étapes 320 et 330 ci-dessous.

Lors de l'étape 320, pour chaque position (x,y) possible pour un pixel dans une image interférométrique acquise par le dispositif d'acquisition 208, est calculée une valeur d'au moins un paramètre VN(x,y) représentatif des variations temporelles d'intensité des signaux interférométriques bidimensionnels $SN_i(x,y)$ acquis à une position correspondante (x,y) lors de l'étape 310 pour la tranche courante de l'échantillon 206.

Les variations temporelles d'intensités des signaux interférométriques bidimensionnels $SN_i(x,y)$ sont dues notamment aux variations temporelles du coefficient $RB_i(x,y)$ et de la phase relative $\phi_i(x, y)$, par exemple du fait des mouvements de diffuseurs, tels que certains éléments intracellulaires dans le cas d'une cellule, à l'intérieur d'un voxel, les autres termes étant sensiblement constants sur la période d'acquisition des N signaux interférométriques.

Dans un mode de réalisation, le paramètre VN(x,y) est représentatif des caractéristiques de la distribution statistique des intensités des signaux interférométriques bidimensionnels acquis, notamment de la dispersion temporelle de ces intensités.

Ce paramètre VN(x,y) est par exemple fonction de l'écart type des intensités $SN_i(x,y)$, i variant de 1 à N dans cette succession de N images interférométriques. Par exemple :

$$VN(x,y) = \sqrt{\frac{1}{N}\sum_{i=1}^{N}\left(SN_i(x,y) - MN(x,y)\right)^2} \qquad (3)$$

avec

$$MN(x,y) = \frac{1}{N}\sum_{i=1}^{N}SN_i(x,y) \qquad (4)$$

Ce paramètre VN(x,y) peut être aussi une valeur moyenne d'écarts types calculés respectivement sur différents sous-ensembles des N images interférométriques.

D'autres paramètres statistiques ou mathématiques permettant de caractériser l'amplitude des variations temporelles d'intensité des pixels et/ou la dispersion de ces intensités sont utilisables tels que la variance (écart type au carré), l'écart interquartile, l'étendue (différence entre sa valeur la plus élevée et sa valeur la moins élevée), etc.

Le paramètre VN(x,y) peut être aussi obtenu par des méthodes diverses de traitement de signaux spatio-temporels : coefficient d'autocorrélation des signaux temporels $SN_i(x,y)$ obtenus pour chaque pixel (x,y), ou décomposition en valeurs singulières par exemple.

Lors de l'étape 330 est calculée une image IB à contraste dynamique ou image DC-FFOCT représentative de variations temporelles d'intensité entre les N signaux interférométriques bidimensionnels de la tranche courante de l'échantillon 206.

Dans un mode de réalisation, chaque pixel IB(x,y) de l'image IB, situé à une position (x,y) donnée, représente la valeur calculée pour cette position donnée pour le paramètre choisi à l'étape 320. Par exemple, un pixel de l'image IB qui est situé à une position (x,y) donnée et/ou au moins une composante de ce pixel, définie relativement à un espace de représentation colorimétrique, présente une valeur qui est fonction de la valeur calculée pour le paramètre considéré pour la position correspondante (x,y) à partir des intensités $SN_i(x,y)$, pour i=1 à N, des N signaux interférométriques acquis à l'étape 310.

Par exemple, lorsque l'espace de représentation colorimétrique utilisé pour l'image IB est une représentation sur des niveaux de gris, la valeur du pixel IB(x,y) peut être égale à ou fonction de la valeur VN(x,y) à un facteur de mise à l'échelle près de sorte, par exemple, à obtenir un niveau de gris codé sur un nombre donné de bits.

Selon un autre exemple, lorsque l'espace de représentation colorimétrique utilisé pour l'image IB est une représentation selon l'espace de représentation colorimétrique RGB (Red, Green, Blue), l'une au moins des composantes R, G ou B du pixel IB(x,y) de position (x,y) dans l'image IB sera égale à ou fonction de VN(x,y) à un facteur de mise à l'échelle près de sorte, par exemple, à obtenir une composante colorimétrique codée sur un nombre donné de bits.

Selon encore un autre exemple, lorsque l'espace de représentation colorimétrique utilisé pour l'image IB est une représentation selon l'espace de représentation colorimétrique YUV (luminance / chrominance), l'une au moins des composantes Y, U ou V du pixel IB(x,y) de position (x,y) dans l'image IB sera égale à ou fonction de VN(x,y) à un facteur de mise à l'échelle près de sorte, par exemple, à obtenir une composante codée sur un nombre donné de bits.

L'image dynamique IB ainsi produite peut ensuite être affichée sur un écran d'affichage 230 relié à l'unité de traitement d'images.

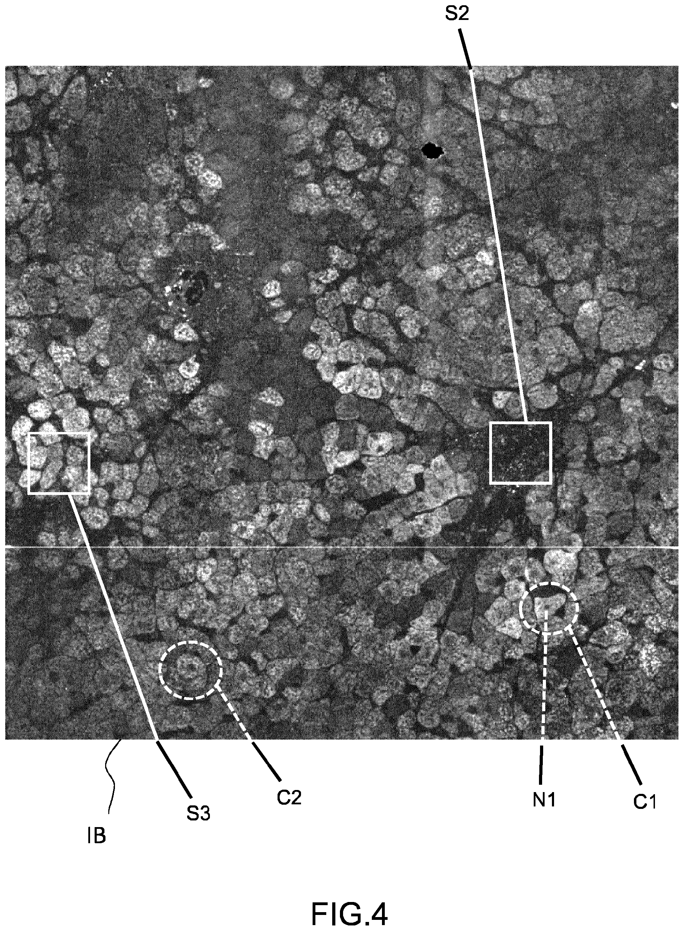

La figure 4 représente un exemple d'une image dynamique IB produite par le procédé d'imagerie DC-FFOCT pour la même tranche de cohérence de l'échantillon que celle représentée sur l'image de la figure 1. Les pixels de cette image sont codés sur des niveaux de gris. L'image correspond à une zone d'échantillon de taille 800 µm par 800 µm extrait d'un foie de rat. Sur cette image, on distingue des structures fines, notamment des cellules individuelles, qui n'étaient pas présentes dans la figure 1. On distingue (voir les zones détourées en ligne pointillée) non seulement des cellules hépatiques C1, C2 mais également leur noyau (zone circulaire N1 plus sombre au milieu de la cellule hépatique C1). De tels détails n'étaient pas présents ou pas visibles dans l'image de la figure 1, obtenue par une technique d'imagerie OCT plein champ selon l'art antérieur pour la même tranche d'échantillon.

L'exemple de la figure 4 illustre en particulier l'intérêt du procédé selon la présente description pour l'imagerie cellulaire et intracellulaire et met notamment en évidence l'amélioration sensible du contraste des structures cellulaires et intracellulaires.

A l'échelle microscopique, notamment au niveau cellulaire ou intracellulaire, se produisent différents mouvements : flux ou circulation de liquides, mais aussi des mouvements intracellulaires de différentes organites (ou « organelles ») telles que noyaux de cellules, mitochondries, lysosomes, etc. Ceci est vrai non seulement pour les tissus in vivo des humains, des animaux vivants ou des plantes, mais aussi pour les échantillons fraîchement prélevés sur des humains, des animaux vivants ou plantes. Par exemple, la mort complète (apoptose) d'une cellule humaine d'un échantillon n'a lieu que 24 à 48 heures après le prélèvement de cet échantillon sur la personne vivante. Pendant ce laps de temps, la vie continue et des mouvements sont décelables, notamment à l'intérieur des cellules.

Les tissus biologiques présentent en outre des propriétés de rétrodiffusion optique telles qu'environ quelques millièmes à quelques millionièmes de la puissance du faisceau lumineux incident sont rétrodiffusés par ces tissus en raison de la présence dans ces tissus de structures diverses, appelées dans la suite de la description « diffuseurs », dont la taille est inférieure ou proche de celle de la longueur d'onde du faisceau lumineux.

Les mouvements des structures fines présentes dans le tissu comme les structures intracellulaires produisent des différences de phase du faisceau rétrodiffusé et, par le biais des interférences, des variations temporelles de l'intensité lumineuse du signal acquis par le microscope interférentiel. Ces variations temporelles d'intensités peuvent être détectées pour une période de temps donnée, par acquisition à une fréquence donnée, d'une succession de signaux interférométriques bidimensionnels de la même tranche d'échantillon. En procédant à une acquisition de signaux interférométriques bidimensionnels à différence de marche fixe entre le bras objet et le bras de référence, les déposants ont montré que l'on peut échantillonner à la cadence souhaitée les signaux interférométriques bidimensionnels résultant des états d'interférences se produisant successivement dans une tranche de l'échantillon et procéder à une analyse des variations temporelles d'intensité entre ces signaux interférométriques bidimensionnels afin de produire une image des régions tissulaires de l'échantillon dans lesquelles se produisent les mouvements qui sont à l'origine de ces variations temporelles d'intensité.

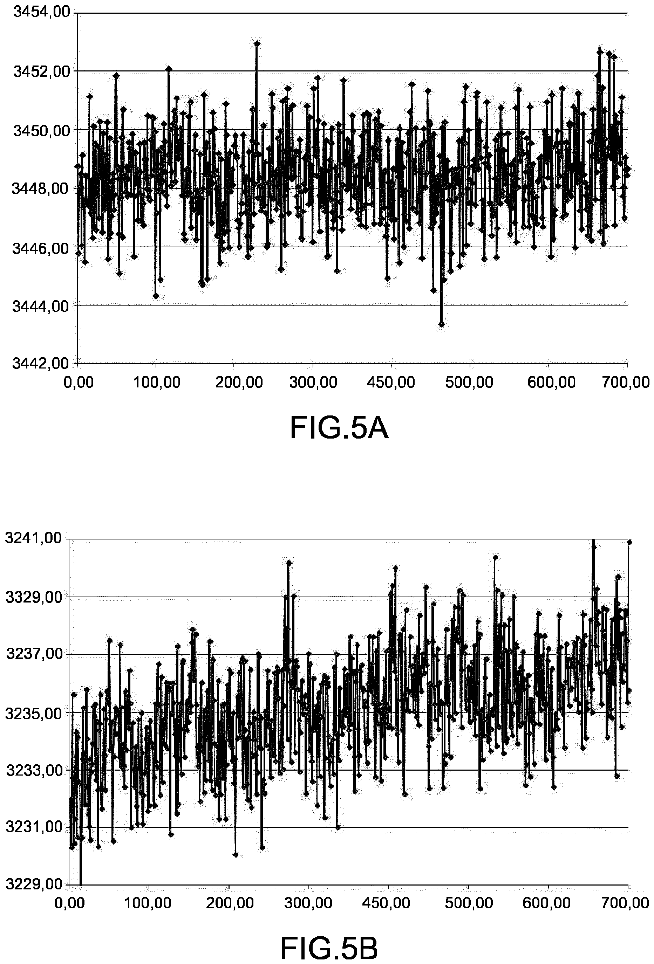

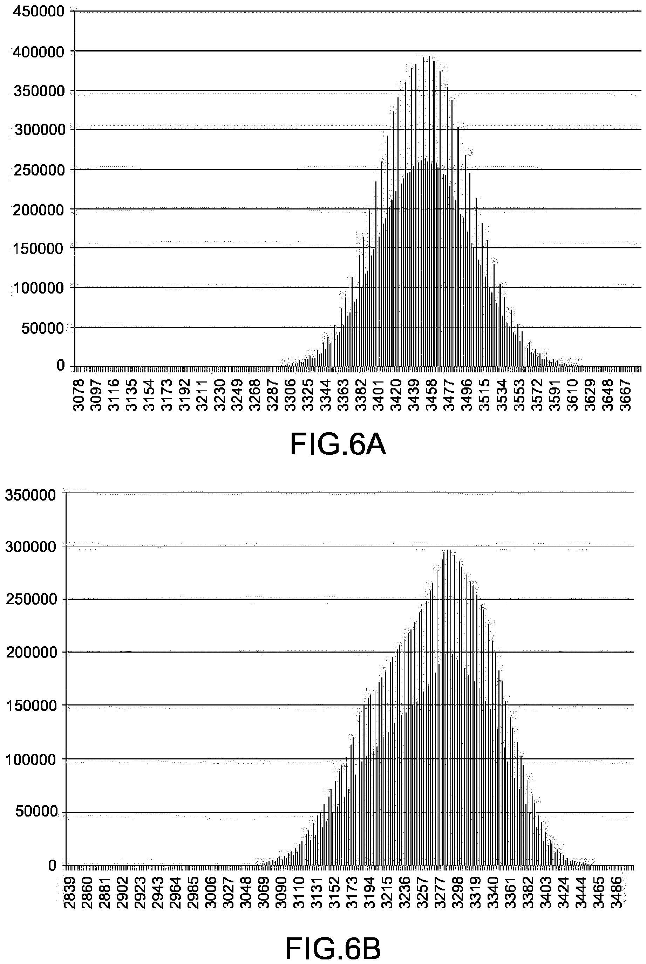

A titre d'exemples, les figures 5A et 5B illustrent les variations temporelles des intensités des signaux interférométriques bidimensionnels acquis par le dispositif d'acquisition 208 pour deux positions respectivement correspondant à deux positions $(x_1, y_1)$ et $(x_2, y_2)$ dans l'image IB représentée sur la figure 4. Les figures 6A et 6B représentent les distributions statistiques des intensités de signaux dont les courbes de variation sont représentées respectivement aux figures 5A et 5B. Pour une première position $(x_1, y_1)$ dans un repère bidimensionnel associé au dispositif d'acquisition 208, on observe sur la figure 5A que les intensités des signaux enregistrés sur 12 bits varient globalement entre 3445 et 3450 (soit une variation de 5 unités environ) avec une distribution temporelle et moyenne sensiblement stable au cours du temps. A cette position $(x_1, y_1)$, qui est par exemple une position située dans la zone S2 représentée à la figure 4, centrée sur des fibres de collagène, on déduit l'absence de mouvement. Pour une deuxième position $(x_2, y_2)$, qui est par exemple une position située dans la zone S3 représentée à la figure 4, à l'intérieur d'une cellule hépatique, on observe sur la figure 5B que les intensités des signaux varient globalement entre 3231 et 3239 (soit une variation de 9 unités environ) avec une plus grande dispersion temporelle et une moyenne sensiblement variable au cours du temps. La figure 5B est représentative au contraire d'une position $(x_2, y_2)$ où il y a un mouvement intracellulaire. Par comparaison des figures 6A et 6B, on peut observer une plus grande dispersion temporelle dans la distribution, représentée figure 6B, des intensités du signal, représenté à la figure 5B, par rapport à la dispersion temporelle, représentée figure 6A, des intensités du signal, représenté à la figure 5A.

Après avoir calculé une image DC-FFOCT pour une tranche de cohérence donnée, on détermine à l'étape 340 si l'on souhaite acquérir une image DC-FFOCT pour une autre tranche d'échantillon. Dans l'affirmative, la position de l'échantillon selon l'axe optique du bras objet est modifiée lors de l'étape 340 et les étapes 310 à 330 sont répétées pour cette deuxième tranche de l'échantillon qui devient la tranche courante. Dans le cas contraire, le procédé se termine.

Une image tridimensionnelle de l'échantillon 206 peut ainsi être obtenue en faisant varier la position de l'échantillon 206, et donc la position en profondeur dans l'échantillon 206 de la tranche de cohérence pour laquelle il y a égalité des chemins optiques dans les deux bras du dispositif d'interférence, et en répétant la procédure d'acquisition de signal interférométrique et de génération d'image pour cette tranche de cohérence.

Les étapes 320 et 330 de génération de l'image dynamique IB peuvent également être exécutées après l'étape 340, sous réserve de conserver en mémoire pour chaque tranche d'échantillon, les N images interférométriques acquises lors de l'étape 310.

Les étapes d'acquisition d'images 310 pour une tranche d'échantillon peuvent aussi être exécutées en parallèle des étapes 320 et 330 de génération de l'image dynamique pour une tranche précédente de l'échantillon 206.

Procédé d'imagerie CDC-FFOCT

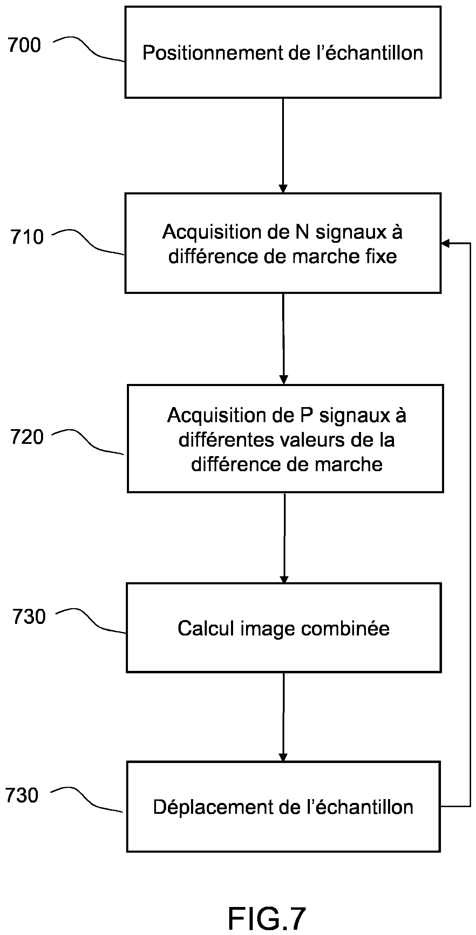

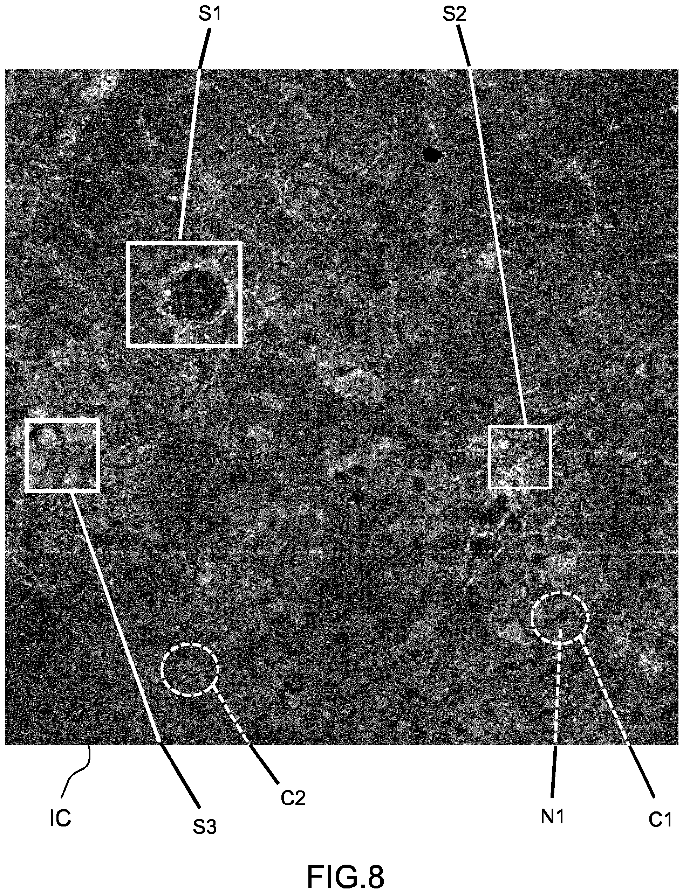

Les étapes d'un mode de réalisation du procédé de génération d'une image combinée, nommé également procédé d'imagerie CDC-FFOCT (pour « Combined Dynamic Contrast FFOCT ») sont décrites par référence aux figures 7 et 8.

Le procédé d'imagerie CDC-FFOCT est mis en oeuvre en utilisant le système d'imagerie 20 et un dispositif de modulation 211, adapté pour faire varier la phase relative entre l'onde de référence et l'onde rétrodiffusée. Le dispositif de modulation permet selon un exemple de générer un déplacement relatif de la surface de réflexion par rapport à l'échantillon, par exemple au moyen d'une platine piézo-électrique pour le déplacement de la surface de réflexion ; il en résulte une variation de la différence de marche entre le bras objet et le bras de référence du dispositif d'interférence 200, comme cela sera décrit plus en détail ci-dessous.

Lors d'une étape initiale 700, le procédé d'imagerie CDC-FFOCT est initialisé et un échantillon 206 est placé dans le bras objet du dispositif d'interférence 200 à une position permettant d'analyser une première tranche d'échantillon. Cette première tranche est la tranche courante pour la première exécution des étapes 710 à 730 décrites ci-dessous.

L'étape 710 est identique à l'étape 310 décrite pour le procédé d'imagerie DC-FFOCT. En particulier, une succession temporelle de N signaux interférométriques bidimensionnels de la tranche courante de l'échantillon 206 est acquise par le dispositif d'acquisition 208 à différence de marche fixe entre le bras objet et le bras de référence.

Lors de l'étape 720, selon un exemple de réalisation, une succession de P signaux interférométriques bidimensionnels de la tranche courante de l'échantillon 206 est acquise par le dispositif d'acquisition 208 à différentes valeurs de la différence de marche entre le bras objet et le bras de référence du dispositif d'interférence 200. La variation de la différence de marche s'effectue par exemple par déplacement, parallèle à l'axe optique du bras de référence, de la surface de référence 205 au moyen de la platine piézo-électrique 211, par exemple un déplacement selon une fonction sinusoïdale résultant en une modulation de la différence de marche. Une synchronisation avec la capture d'images effectuée par le dispositif d'acquisition 208 peut permettre alors d'enregistrer des images interférométriques pour des valeurs prédéfinies de la phase des signaux interférométriques bidimensionnels.

De l'acquisition des signaux interférométriques lors de l'étape 720 résultent P images interférométriques, notées $SP_j$, où $SP_j$ (x,y) est l'intensité du signal interférométrique acquis à la position (x,y) et pour une phase relative entre l'onde de référence et l'onde rétrodiffusée $\varphi = \varphi_j$, j étant un nombre entier variant de 1 à P, $P \geq 2$, et (x,y) représentant la position relativement à un repère bidimensionnel associé au dispositif d'acquisition 208. Ces images interférométriques $SP_j$ (x,y) sont stockées dans une mémoire CM1 accessible par l'unité de traitement 220 ou bien sont transmises à l'unité de traitement 220.

L'intensité lumineuse $SP_j$ (x,y) des signaux d'interférence acquis par le dispositif d'acquisition 208 pour la position (x,y) et pour une phase relative $\varphi = \varphi_j$ peut s'écrire sous la forme :

$$SP_j(x,y) = \frac{S_0}{4}\left(RA(x,y) + RB(x,y) + R_{ref} + 2\sqrt{RB(x,y)R_{ref}}\cos\phi_j(x,y)\right) \qquad (5)$$

où $S_0$, $RA(x,y)$, $R_{ref}$ ont été définis dans l'équation (1) ci-dessus, $RB(x, y)$ est un coefficient de réflexion équivalent proportionnel à l'intensité lumineuse rétrodiffusée par un voxel de l'échantillon 206 à une position donnée (x, y) dans la tranche de cohérence et $\phi_j(x, y)$ est la phase relative entre l'onde de référence et l'onde rétrodiffusée par le voxel de l'échantillon à la position (x, y).

Chaque valeur de pixel de l'image OCT plein champ résultante, correspondant au coefficient $RB(x, y)$, est obtenu par une combinaison des valeurs d'intensité $SP_j$ (x,y) selon des procédés connus.

Dans le cas d'une variation de la phase résultant d'une modulation temporelle du déplacement relatif de la surface de réflexion par rapport à l'échantillon par exemple, la phase $\phi_j(x, y)$ correspond à la phase relative entre l'onde de référence et l'onde rétrodiffusée par le voxel de l'échantillon à la position (x, y) et à un instant $t = t_j$. Les déposants ont démontré cependant que les fluctuations temporelles du coefficient $RB(x, y)$ sont très faibles par rapport au coefficient $RB(x, y)$ recherché (typiquement un facteur 1000). On peut donc raisonnablement approximer $RB(x, y)$ constant en fonction du temps.

Dans un mode de réalisation, on acquiert P = 2 images interférométriques, pour deux valeurs de la différence de marche correspondant à un décalage de phase de $\pi$ entre les phases relatives $\phi_j(x, y)$. Ainsi, on enregistre une première image interférométrique pour une première valeur de la phase relative $\phi_1(x, y)$ et une deuxième image interférométrique pour une deuxième valeur de la phase relative, $\phi_2(x, y) = \phi_1(x, y) + \pi$ par exemple. Chaque valeur de pixel de l'image OCT plein champ résultante, correspondant au coefficient $RB(x, y)$ est obtenu en calculant la différence entre deux valeurs d'intensité $SP_1$ (x,y) et $SP_2$ (x,y) obtenues respectivement pour deux valeurs de phase relative $\phi_1(x, y)$ et $\phi_2(x, y)$ puis en en calculant la valeur absolue de la différence entre les deux valeurs $SP_1$ (x,y) et $SP_2$ (x,y).

La technique précédemment décrite d'acquisition des P signaux interférométriques bidimensionnels correspond à ce qui est utilisé dans un procédé d'imagerie FFOCT selon l'art antérieur. Toute autre méthode de calcul de $RB(x, y)$ conformément à un procédé d'imagerie FFOCT plein champ selon l'art antérieur peut être utilisée.

Notamment, il est possible de procéder de façon connue à une modulation de la différence de marche et à une détection synchronisée par le dispositif de détection afin d'acquérir P signaux interférométriques à P valeurs de la différence de marche pour déterminer l'image FFOCT. Il est également possible d'intégrer sur des fractions de période de modulation le signal interférométrique, par exemple sur 4 périodes, pour obtenir l'amplitude et la phase du signal interférométrique.

Il est également possible de faire l'acquisition en même temps (au même instant) de plusieurs images interférométriques correspondant à des valeurs de phase relative différentes, par exemple deux valeurs de phase relative séparées de $\pi$, par exemple par séparation spatiale de 2 faisceaux déphasés de $\pi$.

Lors de l'étape 730, l'unité de traitement 220 du système d'imagerie est ensuite utilisée pour calculer une image, dite image combinée ou image CDC-FFOCT, représentative également des variations temporelles d'intensité entre les N signaux interférométriques bidimensionnels acquis par le dispositif d'acquisition 208 lors de l'étape 710.

L'image combinée IC est calculée à partir, d'une part, des intensités des P signaux interférométriques bidimensionnels acquis par le dispositif d'acquisition 208 à l'étape 720 et, d'autre part, des variations temporelles d'intensités entre les N signaux interférométriques bidimensionnels acquis par le dispositif d'acquisition 208 lors de l'étape 710.

Dans un premier mode de réalisation, une première image intermédiaire IB, ou image à contraste dynamique, est calculée à partir des variations temporelles d'intensité entre les N signaux interférométriques bidimensionnels acquis par le dispositif d'acquisition 208 à l'étape 710 et une deuxième image intermédiaire IA, dite image tomographique, est calculée à partir des intensités des P signaux interférométriques bidimensionnels acquis par le dispositif d'acquisition 208 à l'étape 720. L'image combinée IC est ensuite calculée par combinaison pixel à pixel de ces deux images intermédiaires IA et IB. Par combinaison pixel à pixel, on entend ici qu'un pixel IA(x,y) de position (x,y) dans l'image IA est combiné avec le pixel IB(x,y) de même position (x,y) dans l'image IB.

Dans un deuxième mode de réalisation, aucune image intermédiaire n'est générée et l'image combinée IC est calculée en calculant directement les pixels de l'image combinée à partir des intensités des signaux interférométriques acquis. En particulier, pour un pixel de position donnée (x,y) dans l'image combinée IC, une valeur de pixel IC(x,y) est calculée en fonction, d'une part, des intensités des P signaux interférométriques bidimensionnels acquis en un point de position correspondante dans un repère bidimensionnel associé au dispositif d'acquisition et, d'autre part, des variations temporelles d'intensité des N signaux interférométriques bidimensionnels acquis en un point de position correspondante dans un repère bidimensionnel associé au dispositif d'acquisition.

Dans le premier comme dans le deuxième mode de réalisation, une valeur de pixel IC(x,y) de position donnée (x,y) dans l'image combinée est calculée par combinaison de deux valeurs de pixel IA(x,y) et IB(x,y), où :

- la valeur IA(x,y) est calculée à partir des intensités des P signaux interférométriques bidimensionnels acquis à différentes valeurs de la différence de marche pour la position (x,y) et représente le coefficient RB(x,y) proportionnel à l'intensité de l'onde rétrodiffusée par un voxel donné de la tranche de cohérence de l'échantillon, et
- la valeur IB(x,y) est calculée à partir des intensités des N signaux interférométriques bidimensionnels acquis à différence de marche fixe et représente les variations temporelles des intensités déterminées entre les N signaux interférométriques bidimensionnels acquis au point de position correspondante dans un repère associé au dispositif d'acquisition.

La valeur IB(x,y) est calculée selon le procédé décrit pour l'étape 330 par exemple. En particulier, la valeur IB(x,y) peut être calculée en fonction de la valeur d'au moins un paramètre VN(x,y) représentatif des variations temporelles des intensités $SN_i$ (x,y) entre les N signaux interférométriques.

On suppose ici, pour la combinaison de valeurs de pixel, que l'acquisition des signaux effectuée aux étapes 710 et 720 a été effectuée de sorte que le signal $SN_i$ (x,y) acquis pour la position (x,y) lors de l'étape 710 provient du même voxel de l'échantillon 206 que le signal $SP_j$(x,y) acquis pour la position (x,y) lors de l'étape 720: ceci sera le cas si ni l'échantillon 206, ni le dispositif d'acquisition 208 ne sont déplacés pendant l'exécution des étapes 710 et 720 et que le dispositif d'acquisition 208 acquiert des images de même résolution lors des étapes 710 et 720 et en utilisant le même repère bidimensionnel.

La combinaison de valeur de pixel IA(x,y) et IB(x,y) est effectuée de sorte à ce que les informations contenues respectivement dans chacune des images IA(x,y) et IB(x,y) pour un voxel donné de l'échantillon 206 soient présentes dans l'image combinée IC résultante. Cette combinaison peut être effectuée de sorte qu'un utilisateur visualisant l'image IC résultante soit en mesure de discriminer les structures mises en évidence dans l'image IA (image tomographique) des fluctuations de structures mis en évidence dans l'image IB (image à contraste dynamique).

En particulier, la valeur IC(x,y) d'un pixel de l'image combinée qui est situé à une position (x,y) donnée dans l'image IC est fonction de la valeur IA(x,y) du pixel situé à cette même position (x,y) dans l'image tomographique IA et fonction de la valeur calculée pour cette position (x,y) pour le paramètre utilisé lors de l'étape 720. Le pixel IC(x,y) peut présenter une composante définie relativement à un espace de représentation colorimétrique.

Ainsi un utilisateur pourra visualiser pour un endroit donné de l'échantillon 206, une image contenant à la fois les informations provenant d'un procédé connu d'imagerie par microscopie interférentielle plein champ en lumière incohérente et les informations sur les mouvements des structures fines de l'échantillon 206 mises en évidence par le procédé d'imagerie DC-FFOCT selon la présente description.

Différentes méthodes de combinaison de ces valeurs IA(x,y) et IB(x,y) sont possibles et les méthodes décrites ci-dessous sont données à titre d'exemples non limitatifs.

Une première méthode de combinaison consiste à affecter, pour chaque position (x,y) dans une zone de l'image combinée, la valeur de pixel IA(x,y) à une première composante colorimétrique d'un pixel IC(x,y) de l'image IC et la valeur de pixel IB(x,y) à une deuxième composante colorimétrique de ce pixel IC(x,y). Par exemple, en utilisant une représentation selon l'espace de représentation colorimétrique RGB, la composante R du pixel IC(x,y) de position (x,y) dans l'image IC sera égal à la valeur de pixel IA(x,y) et la composante B (Blue) du pixel IC(x,y) de position (x,y) dans l'image IC sera égal à la valeur de pixel IB(x,y) ou inversement.

Une deuxième méthode de combinaison consiste à définir deux tables de correspondance TA, TB (appelée Look-up table ou LUT dans la terminologie anglo-saxonne), une première table de correspondance TA pour les valeurs de pixel IA(x,y) et une deuxième table de correspondance TB pour les valeurs de pixel IB(x,y). Chaque table de correspondance TA, respectivement TB, sert à calculer pour chaque position (x,y) possible dans une zone de l'image combinée, une valeur de pixel TA(x,y), respectivement TB(x,y), résultant de la transformation de la valeur de pixel IA(x,y), respectivement IB(x,y) par la table de correspondance TA, respectivement TB. La valeur d'un pixel IC(x,y) à une position (x,y) dans l'image IC est alors obtenue par une fonction de combinaison de la valeur de pixel TA(x,y) et de la valeur de pixel TB(x,y). Cette fonction de combinaison est par exemple un « OU logique » des valeurs de pixel TA(x,y) et TB(x,y), ou bien une fonction d'addition de ces deux pixels ou de calcul de valeur moyenne ou de somme pondérée par des coefficients de pondération.

L'image résultante IC peut être une image en couleur ou une image en niveau de gris selon la méthode de combinaison choisie.

Lors de l'étape 730, l'image combinée IC ainsi générée peut ensuite être affichée sur un écran d'affichage 230 relié à l'unité de traitement d'images.

La figure 8 représente un exemple d'une image IC résultant de la combinaison de l'image IA représentée à la figure 1 avec l'image IB représentée à la figure 4. La méthode utilisée pour la combinaison est par exemple la deuxième méthode telle que décrite ci-dessus. Chacune de ces images représente une même zone et une même tranche d'échantillon de taille 800 μm par 800 μm que la zone et la tranche imagée sur les figures IA et IB (tissu biologique de foie de rat). Par comparaison de l'image IA de la figure 1 avec l'image IC de la figure 8, il apparaît clairement que l'image IC est beaucoup plus riche en structures fines que l'image IA mais comprend néanmoins les informations de l'image IA de la figure 1. Ces structures fines de l'image IC correspondent en réalité à des fluctuations détectées dans la tranche de l'échantillon concernée : les structures fines de l'image de la figure 8 sont celles provenant de l'image IB (figure 4) qui a été combinée avec l'image IA (figure 1).

A titre d'exemple, dans l'image IA de la figure 1 on peut distinguer de nombreuses fibres de collagène, une zone S2 de concentration de fibres de collagène et un gros capillaire dans la zone S1, mais on ne distingue pas de cellules individuelles. A contrario, dans l'image IB de la figure 4, on distingue des cellules individuelles dans les zones C1, C2 ou S3, mais pas les fibres de collagène de la zone S2 ou le gros capillaire de la zone S1. Dans l'image IC, on distingue à la fois les fibres de collagène (zone S2), le gros capillaire (zone S1) et les cellules individuelles (zones C1, C2 ou S3).

Grâce à l'image combinée IC, un utilisateur peut disposer d'une image unique où sont présentes de nombreuses informations visuelles sur les structures présentes dans la tranche de l'échantillon, tout comme sur les fluctuations, représentatives des mouvements et activités cellulaires ou intracellulaires, de cette même tranche d'échantillon.

Une fois une image combinée CDC-FFOCT calculée pour une tranche de cohérence donnée de l'échantillon, on détermine à l'étape 740 si l'on souhaite générer une image combinée CDC-FFOCT pour une autre tranche d'échantillon. Dans l'affirmative, la position de l'échantillon selon l'axe optique du bras objet est modifiée lors de l'étape 740 et les étapes 710 à 730 sont répétées pour cette deuxième tranche de l'échantillon qui devient la tranche courante. Dans le cas contraire, le procédé se termine.

Une image tridimensionnelle de l'échantillon 206 peut ainsi être obtenue en faisant varier la position de l'échantillon 206, et donc la position en profondeur dans l'échantillon 206 de la tranche de cohérence pour laquelle il y a égalité des chemins optiques dans les deux bras du dispositif d'interférence, et en répétant la procédure d'acquisition de signal interférométrique et de génération d'image pour cette tranche de cohérence.

Les procédés d'imagerie DC-FFOCT et CDC-FFOCT décrits ci-dessus s'appliquent notamment à l'acquisition d'images de cellules ou d'images intracellulaires, et peuvent se révéler particulièrement utiles pour le diagnostic du cancer où l'examen des détails cellulaires s'avère nécessaire. Notamment, l'origine dynamique du contraste généré par les procédés d'imagerie DC-FFOCT et CDC-FFOCT peut permettre, en plus de la visualisation des détails cellulaires, de visualiser l'activité cellulaire et de distinguer l'état métabolique d'une cellule (suractivité, mort cellulaire, nécrose).

Ils peuvent également s'appliquer de façon générale dans toutes les situations où les différents voxels de la tranche de cohérence de l'échantillon à analyser présentent des mouvements, activités, fonctions, mécanismes ou propriétés physico-chimiques entraînant une variation temporelle de l'intensité lumineuse réfléchie par ces voxels. Ils sont en outre applicables à des échantillons quelconques, que ces échantillons soient biologiques ou non.

**Revendications**

1. Système d'imagerie (20) par microscopie interférentielle plein champ d'un échantillon volumique diffusant (206) comprenant :

   - une source lumineuse (201) spatialement incohérente configurée pour émettre des ondes lumineuses incidentes ;
   - un dispositif d'interférence (200) comprenant un bras objet destiné à recevoir l'échantillon et un bras de référence sur lequel est agencée une surface de réflexion (205), le dispositif d'interférence étant adapté pour produire, lorsque l'échantillon est disposé sur le bras objet du dispositif d'interférence, en chaque point d'un champ d'imagerie d'une tranche de l'échantillon, une interférence entre une onde de référence obtenue par réflexion desdites ondes lumineuses incidentes sur une surface élémentaire de la surface de réflexion (205) correspondant audit point du champ d'imagerie et une onde objet obtenue par rétrodiffusion desdites ondes lumineuses incidentes par un voxel de ladite tranche de l'échantillon à une profondeur donnée, ledit voxel correspondant audit point du champ d'imagerie,
   - un dispositif d'acquisition (208) comprenant une surface de détection utile et adapté pour acquérir, à différence de marche fixe entre le bras objet et le bras de référence, une succession temporelle de N signaux interférométriques bidimensionnels résultant des interférences produites en chaque point du champ d'imagerie, ledit champ d'imagerie de la tranche d'échantillon étant conjugué optiquement avec ladite surface de détection utile,
   - une unité de traitement (220) configurée pour calculer une image (IB, IC) représentative de variations temporelles d'intensité entre lesdits N signaux interférométriques bidimensionnels.

2. Système d'imagerie selon la revendication 1 dans lequel l'unité de traitement (220) est configurée pour calculer ladite image en calculant, pour chaque pixel de position donnée dans ladite image, une valeur de pixel en fonction d'une valeur d'un paramètre représentatif des variations temporelles d'intensité des N signaux interférométriques bidimensionnels acquis en un point de position correspondante dans un repère bidimensionnel associé au dispositif d'acquisition.

3. Système d'imagerie selon la revendication 2, dans lequel ledit paramètre est représentatif de la dispersion temporelle des intensités des N signaux interférométriques bidimensionnels.

4. Système d'imagerie selon l'une quelconque des revendications 2 ou 3 dans lequel ledit pixel présente au moins une composante, définie relativement à un espace de représentation colorimétrique, dont la valeur est fonction de la valeur dudit paramètre.

5. Système d'imagerie selon l'une quelconque des revendications 1 à 4 dans lequel

   - le dispositif d'acquisition est configuré pour acquérir en outre P signaux interférométriques bidimensionnels pour la tranche d'échantillon à différentes valeurs de la différence de marche entre les deux bras du dispositif d'interférence,
   - l'unité de traitement est configurée pour calculer une image (IC), dite image combinée, à partir des intensités des P signaux interférométriques bidimensionnels et desdites variations temporelles d'intensité.

6. Système d'imagerie selon la revendication 5 dans lequel l'unité de traitement (220) est configurée pour calculer ladite image combinée en calculant, pour un pixel de position donnée dans ladite image combinée, une valeur de pixel en fonction, d'une part, des intensités des P signaux interférométriques bidimensionnels acquis en un point de position correspondante dans un repère bidimensionnel associé au dispositif d'acquisition et, d'autre part, des variations temporelles d'intensité des N signaux interférométriques bidimensionnels acquis en un point de position correspondante dans un repère bidimensionnel associé au dispositif d'acquisition.

7. Procédé d'imagerie par microscopie interférentielle plein champ d'un échantillon volumique diffusant (206) comprenant

   - la mise en place de l'échantillon sur un bras objet d'un dispositif d'interférence,
   - l'émission, au moyen d'une source lumineuse (201) spatialement incohérente d'ondes lumineuses incidentes ;
   - la production, au moyen du dispositif d'interférence (200), pour chaque point d'un champ d'imagerie d'une tranche de l'échantillon, d'une interférence entre une onde de référence obtenue par réflexion desdites ondes lumineuses incidentes sur une surface élémentaire d'une surface de réflexion (205) d'un bras de référence du dispositif d'interférence, ladite surface élémentaire correspondant audit point du champ d'imagerie, et une onde objet obtenue par rétrodiffusion desdites ondes incidentes par un voxel d'une tranche de l'échantillon à une profondeur donnée, ledit voxel correspondant audit point du champ d'imagerie,

- l'acquisition, au moyen d'un dispositif d'acquisition (208) comprenant une surface de détection utile et à différence de marche fixe entre le bras objet et le bras de référence, d'une succession temporelle de N signaux interférométriques bidimensionnels résultant des interférences pour chaque point du champ d'imagerie, ledit champ d'imagerie de la tranche d'échantillon étant conjugué optiquement avec ladite surface de détection utile,

- le calcul d'une image (IB, IC) représentative de variations temporelles d'intensité entre les N signaux interférométriques bidimensionnels.

8. Procédé d'imagerie selon la revendication 7, dans lequel l'étape de calcul de l'image comprend le calcul, pour chaque pixel de position donnée dans ladite image, d'une valeur de pixel en fonction d'une valeur d'un paramètre représentatif des variations temporelles d'intensité des N signaux interférométriques bidimensionnels acquis en un point de position correspondante dans un repère bidimensionnel associé au dispositif d'acquisition.

9. Procédé d'imagerie selon la revendication 8, dans lequel ledit paramètre est représentatif de la dispersion temporelle desdites intensités des N signaux interférométriques bidimensionnels.

10. Procédé d'imagerie selon l'une quelconque des revendications 8 ou 9, dans lequel ledit pixel présente au moins une composante, définie relativement à un espace de représentation colorimétrique, dont la valeur est fonction de la valeur dudit paramètre.

11. Procédé d'imagerie selon l'une quelconque des revendications 7 à 10, comprenant en outre

- l'acquisition d'au moins P signaux interférométriques bidimensionnels pour la tranche d'échantillon à différentes valeurs de la différence de marche entre les deux bras du dispositif d'interférence,
- le calcul d'une image (IC), dite image combinée, à partir des intensités des P signaux interférométriques bidimensionnels et desdites variations temporelles d'intensité.

12. Procédé d'imagerie selon la revendication 11, dans lequel le calcul de l'image combinée comprend, pour chaque pixel de position donnée de l'image combinée, le calcul d'une valeur de pixel en fonction, d'une part, des intensités des P signaux interférométriques bidimensionnels acquis en un point de position correspondante dans un repère bidimensionnel associé au dispositif d'acquisition et, d'autre part, des variations temporelles d'intensité des N signaux interférométriques bidimensionnels acquis en un point de position correspondante dans un repère bidimensionnel associé au dispositif d'acquisition.

**Patentansprüche**

1. Bildgebungssystem (20) für die Vollfeld-Interferenzmikroskopie einer streuenden Volumenprobe (206), aufweisend:

- eine räumlich inkohärente Lichtquelle (201), die so ausgebildet ist, dass sie einfallende Lichtwellen aussendet;
- eine Interferenzvorrichtung (200), die einen Objektarm zur Aufnahme der Probe und einen Referenzarm auf dem eine Reflexionsfläche (205) angeordnet ist, aufweist, wobei die Interferenzvorrichtung ausgebildet ist, bei Anordnung der Probe auf dem Objektarm der Interferenzvorrichtung an jedem Punkt eines Bildfeldes einer Probenschicht, eine Interferenz zwischen einer Referenzwelle, die durch Reflexion der einfallenden Lichtwellen an einer Elementarfläche der Reflexionsfläche (205) erhalten wird, die dem Punkt des Bildfeldes entspricht, und eine Objektwelle, die durch Rückstreuung der einfallenden Lichtwellen an einem Voxel der Probenschicht in einer vorgegebenen Tiefe erhalten wird, wobei das Voxel dem Punkt des Bildfeldes entspricht, zu erzeugen,
- eine Erfassungsvorrichtung (208), die eine geeignete Detektionsfläche aufweist und dazu ausgebildet ist, bei einer festen Gangdifferenz zwischen dem Objektarm und dem Referenzarm eine zeitliche Folge von N zweidimensionalen interferometrischen Signalen zu erfassen, die sich aus den an jedem Punkt des Bildfelds erzeugten Interferenzen ergeben, wobei das Bildfeld der Probenschicht optisch mit der geeigneten Detektionsfläche konjugiert ist,
- eine Verarbeitungseinheit (220), die derart ausgebildet ist, dass sie ein Bild (IB, IC) berechnet, das für zeitliche Intensitätsänderungen zwischen den N zweidimensionalen interferometrischen Signalen repräsentativ ist.

2. Bildgebungssystem gemäß Anspruch 1, bei dem die Verarbeitungseinheit (220) derart ausgebildet ist, dass sie das Bild berechnet, indem sie für jedes Pixel einer vorgegebenen Position in dem Bild einen Pixelwert in Abhängigkeit von einem Wert eines Parameters berechnet, der für die zeitlichen Intensitätsschwankungen der N zweidimensionalen interferometrischen Signale repräsentativ ist, die an einem Punkt einer entsprechenden Position in einem zweidimensionalen Koordinatensystem erfasst werden, das der Erfassungsvorrichtung zugeordnet ist.

3. Bildgebungssystem gemäß Anspruch 2, wobei der Parameter repräsentativ für die zeitliche Dispersion der Intensitäten der N zweidimensionalen interferometrischen Signale ist.

4. Bildgebungssystem nach einem der Ansprüche 2 oder 3, wobei das Pixel mindestens eine Komponente aufweist, die relativ zu einem Farbdarstellungsraum definiert ist, und deren Wert vom Wert des Parameters abhängt.

5. Bildgebungssystem gemäß einem der Ansprüche 1 bis 4, wobei

- die Erfassungsvorrichtung derart ausgebildet ist, dass sie ferner P zweidimensionale interferometrische Signale für die Probenschicht bei verschiedenen Werten der Gangdifferenz zwischen den beiden Armen der Interferenzvorrichtung erfasst,
- die Verarbeitungseinheit derart ausgebildet ist, dass sie aus den Intensitäten der P zweidimensionalen interferometrischen Signale und den genannten zeitlichen Intensitätsänderungen ein Bild (IC), das sogenannte kombinierte Bild, berechnet.

6. Bildgebungssystem gemäß Anspruch 5, bei dem die Verarbeitungseinheit (220) derart ausgebildet ist, dass sie das kombinierte Bild berechnet, indem sie für ein Pixel mit vorgegebener Position in dem kombinierten Bild einen Pixelwert berechnet, der einerseits von, der Intensitäten der P zweidimensionalen interferometrischen Signale, die an einem Punkt einer entsprechenden Position in einem zweidimensionalen Koordinatensystem, das der Erfassungsvorrichtung zugeordnet ist, erfasst werden, und andererseits der zeitlichen Intensitätsänderungen der N zweidimensionalen interferometrischen Signale, die an einem Punkt einer entsprechenden Position in einem zweidimensionalen Koordinatensystem, das der Erfassungsvorrichtung zugeordnet ist, erfasst werden.

7. Bildgebungsverfahren durch Vollfeld-Interferenzmikroskopie einer streuenden Volumenprobe (206), aufweisend

- Auflegen der Probe auf einen Objektarm einer Interferenzvorrichtung,
- Aussenden, mittels einer räumlich inkohärenten Lichtquelle (201), von einfallenden Lichtwellen;
- Erzeugen, mittels der Interferenzvorrichtung (200), für jeden Punkt eines Bildfeldes einer Probenschicht, einer Interferenz zwischen einer Referenzwelle, die durch Reflexion der einfallenden Lichtwellen an einer Elementarfläche einer Reflexionsfläche (205) eines Referenzarms der Interferenzvorrichtung erhalten wird, wobei die Elementarfläche dem Punkt des Bildfeldes entspricht, und einer Objektwelle, die durch Rückstreuung der einfallenden Wellen an einem Voxel einer Probenschicht in einer vorgegebenen Tiefe erhalten wird, wobei das Voxel dem Punkt des Bildfeldes entspricht,
- Erfassen, mittels einer Erfassungsvorrichtung (208), die eine geeignete Detektionsfläche aufweist und eine feste Gangdifferenz zwischen dem Objektarm und dem Referenzarm hat, einer zeitlichen Folge von N zweidimensionalen interferometrischen Signalen, die sich aus den Interferenzen für jeden Punkt des Bildfelds ergeben, wobei das Bildfeld der Probeschicht optisch mit der geeigneten Detektionsfläche konjugiert ist,
- Berechnen eines Bildes (IB, IC), das für zeitliche Intensitätsänderungen zwischen den N zweidimensionalen interferometrischen Signalen wiedergegeben wird.

8. Bildgebungsverfahren nach Anspruch 7, bei dem der Schritt der Bildberechnung für jedes Pixel einer vorgegebenen Position in dem Bild die Berechnung eines Pixelwerts in Abhängigkeit von einem Wert eines Parameters umfasst, der repräsentativ für die zeitlichen Intensitätsschwankungen der N zweidimensionalen interferometrischen Signale ist, die an einem Punkt einer entsprechenden Position in einem zweidimensionalen Koordinatensystem erfasst werden, das mit der Erfassungsvorrichtung verbunden ist.

9. Bildgebungsverfahren nach Anspruch 8, wobei der Parameter repräsentativ für die zeitliche Dispersion der Intensitäten der N zweidimensionalen interferometrischen Signale ist.

10. Bildgebungsverfahren nach einem der Ansprüche 8 oder 9, wobei das Pixel mindestens eine Vorrichtung aufweist, die relativ zu einem Farbdarstellungsraum definiert ist und deren Wert von dem Wert des Parameters abhängt.

11. Bildgebungsverfahren nach einem der Ansprüche 7 bis 10, ferner aufweisend

- Erfassen von mindestens P zweidimensionalen interferometrischen Signalen für die Probenschicht bei verschiedenen Werten der Gangdifferenz zwischen den beiden Armen der Interferenzvorrichtung,
- die Berechnung eines Bildes (IC), des sogenannten kombinierten Bildes, aus den Intensitäten der P zweidimensionalen interferometrischen Signale und den genannten zeitlichen Intensitätsänderungen.

**12.** Bildgebungsverfahren nach Anspruch 11, bei dem die Berechnung des kombinierten Bildes für jedes Pixel einer vorgegebenen Position des kombinierten Bildes die Berechnung eines Pixelwertes in Abhängigkeit einerseits von den Intensitäten der P zweidimensionalen interferometrischen Signale, die an einem Punkt der entsprechenden Position in einem zweidimensionalen, der Erfassungsvorrichtung zugeordneten Koordinatensystem erfasst werden, und andererseits von den zeitlichen Intensitätsänderungen der N zweidimensionalen interferometrischen Signale, die an einem Punkt der entsprechenden Position in einem zweidimensionalen, der Erfassungsvorrichtung zugeordneten Koordinatensystem erfasst werden, umfasst.

**Claims**

**1.** A system (20) for full-field interference microscopy imaging of a diffusing three-dimensional sample (206) comprising:

- a spatially incoherent light source (201) configured to emit incident light waves;
- an interference device (200) comprising an object arm intended to receive the sample and a reference arm on which a reflection surface (205) is arranged, the interference device being adapted to produce, when the sample is disposed on the object arm of the interference device, at each point of an imaging field of a slice of the sample, an interference between a reference wave obtained by reflection of said incident light waves on an elementary surface of the reflection surface (205) corresponding to said point of the imaging field and an object wave obtained by backscattering of said incident light waves by a voxel of said slice of the sample at a given depth, said voxel corresponding to said point of the imaging field,
- an acquisition device (208) comprising a useful detection surface and adapted to acquire, with fixed optical path difference between the object arm and the reference arm, a temporal succession of N two-dimensional interferometric signals resulting from the interferences produced at each point of the imaging field, wherein said imaging field of the slice of the sample is optically conjugated with said useful detection surface;
- a processing unit (220) configured to compute an image (IB, IC) representative of temporal variations of intensity between said N two-dimensional interferometric signals.

**2.** The imaging system as claimed in claim 1, in which the processing unit (220) is configured to compute said image by computing, for each pixel of given position in said image, a pixel value as a function of a value of a parameter representative of the temporal variations of intensity of the N two-dimensional interferometric signals acquired at a point of corresponding position in a two-dimensional coordinate system associated with the acquisition device.

**3.** The imaging system as claimed in claim 2, in which said parameter is representative of the temporal dispersion of the intensities of the N two-dimensional interferometric signals.

**4.** The imaging system as claimed in either one of claims 2 and 3, in which said pixel exhibits at least one component, defined in relation to a colorimetric representation space, whose value is a function of the value of said parameter.

**5.** The imaging system as claimed in any one of claims 1 to 4, in which

- the acquisition device is further configured to acquire P two-dimensional interferometric signals for the sample slice for different values of the optical path difference between the two arms of the interference device,
- the processing unit is configured to compute an image (IC), called combined image, from the intensities of the P two-dimensional interferometric signals and said temporal variations of intensity.

**6.** The imaging system as claimed in claim 5, in which the processing unit (220) is configured to compute said combined image by computing, for a pixel of given position in said combined image, a pixel value as a function, on the one hand, of the intensities of the P two-dimensional interferometric signals acquired at a point of corresponding position in a two-dimensional coordinate system associated with the acquisition device and, on the other hand, of the temporal variations of intensity of the N two-dimensional interferometric signals acquired at a point of corresponding position in a two-dimensional coordinate system associated with the acquisition device.

7. A method for full-field interference microscopy imaging of a diffusing three-dimensional sample (206) comprising

- the emission of incident light waves using a spatially incoherent light source (201);
- the placement of the sample on an object arm of an interference device,
- the production, by means of the interference device (200), for each point of an imaging field of a slice of the sample, of an interference between a reference wave obtained by reflection of said incident light waves on an elementary surface of a reflection surface (205) of a reference arm of the interference device, said elementary surface corresponding to said point of the imaging field, and an object wave obtained by backscattering of said incident waves by a voxel of a slice of the sample at a given depth, said voxel corresponding to said point of the imaging field,
- the acquisition, using an acquisition device (208) having a useful detection surface, and with fixed optical path difference between the object arm and the reference arm, of a temporal succession of N two-dimensional interferometric signals resulting from the interferences for each point of the imaging field, wherein the imaging field of the slice of the sample is optically conjugated with said useful detection surface,
- the computation of an image (IB, IC) representative of temporal variations of intensity between the N two-dimensional interferometric signals.

8. The imaging method as claimed in claim 7, in which the step of computation of the image comprises the computation, for each pixel of given position in said image, of a pixel value as a function of a value of a parameter representative of the temporal variations of intensity of the N two-dimensional interferometric signals acquired at a point of corresponding position in a two-dimensional coordinate system associated with the acquisition device.

9. The imaging method as claimed in claim 8, in which said parameter is representative of the temporal dispersion of said intensities of the N two-dimensional interferometric signals.

10. The imaging method as claimed in either one of claims 8 and 9, in which said pixel exhibits at least one component, defined in relation to a colorimetric representation space, whose value is a function of the value of said parameter.

11. The imaging method as claimed in any one of claims 7 to 10, also comprising

- the acquisition of at least P two-dimensional interferometric signals for the sample slice for different values of the optical path difference between the two arms of the interference device,
- the computation of an image (IC), called combined image, from the intensities of the P two-dimensional interferometric signals and said temporal variations of intensity.

12. The imaging method as claimed in claim 11, in which the computation of the combined image comprises, for each pixel of given position of the combined image, the computation of a pixel value as a function, on the one hand, of the intensities of the P two-dimensional interferometric signals acquired at a point of corresponding position in a two-dimensional coordinate system associated with the acquisition device and, on the other hand, of the temporal variations of intensity of the N two-dimensional interferometric signals acquired at a point of corresponding position in a two-dimensional coordinate system associated with the acquisition device.

ART ANTERIEUR

FIG.1

FIG.2

300 — Positionnement de l'échantillon

310 — Acquisition de N signaux d'interférence à différence de marche fixe

320 — Calcul des variations d'intensité

330 — Calcul de l'image

340 — Déplacement de l'échantillon

FIG.3

FIG.4

FIG.5A

FIG.5B

FIG.6A

FIG.6B

700 — Positionnement de l'échantillon

710 — Acquisition de N signaux à différence de marche fixe

720 — Acquisition de P signaux à différentes valeurs de la différence de marche

730 — Calcul image combinée

730 — Déplacement de l'échantillon

FIG.7

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2817030

**Littérature non-brevet citée dans la description**

- Full-field optical cohérence tomography. **A. DUBOIS ; C. BOCCARA.** Optical Cohérence Tomography - Technology and Applications. Springer, 2009

- **O. ASSAYAG et al.** Large Field, High Resolution Full-Field Optical Cohérence Tomography: A Pre-clinical Study of Human Breast Tissue and Cancer Assessment. *Technology in Cancer Research and Treatment,* Octobre 2014, vol. 13 (5